(19) Europäisches Patentamt
European Patent Office
Office européen des brevets

(11) **EP 4 477 871 A1**

(12) **EUROPEAN PATENT APPLICATION**

(43) Date of publication:
**18.12.2024 Bulletin 2024/51**

(21) Application number: **23382605.6**

(22) Date of filing: **16.06.2023**

(51) International Patent Classification (IPC):
**F03D 7/02** (2006.01) **F03D 17/00** (2016.01)

(52) Cooperative Patent Classification (CPC):
**F03D 7/028; F03D 7/02; F03D 17/006;
F03D 17/018; F03D 17/025;** F03D 80/507;
F03D 80/85; F05B 2270/1091; F05B 2270/3032

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **SGRE-Association
Siemens Energy Global GmbH & Co. KG
SE I IM P Intellectual Property
Siemenspromenade 9
91058 Erlangen (DE)**

(54) **METHOD OF OPERATING A WIND TURBINE AND CONTROL SYSTEM**

(57) A method of operating a wind turbine is provided. The wind turbine (100) comprises a power generation system (120) configured to generate electrical power from rotational mechanical energy and one or more electrical cables (20) configured to transport the electrical power generated by the power generation system (120). The one or more electrical cables (20) are associated with a cable temperature threshold for a cable temperature of the one or more electrical cables (20). A measured component operating parameter of a component (122) of the power generation system (120) is obtained. The measured component operating parameter is compared to a component operating parameter threshold and/or an estimated cable temperature that is estimated from the measured component operating parameter is compared to the cable temperature threshold. A mitigation action is taken to keep stable or reduce the cable temperature if the comparison indicates that the respective threshold is met or exceeded.

FIG 4

EP 4 477 871 A1

**Description**

FIELD OF THE INVENTION

The present invention relates to a method of operating a wind turbine, to a control system of a wind turbine and to a computer program for operating a wind turbine. It in particular relates to the avoiding of over-temperature conditions in cables of a wind turbine.

BACKGROUND

The development of wind turbine technology has made significant advances over the last years. Wind turbines that have been installed in the past often have a nominal output power that is relatively low compared to today's standard. It is thus desirable to increase the output power of existing wind turbines.
To increase the output power of existing wind turbines, it is known to provide such wind turbines with an upgrade that increases the energy production. Such upgrade may involve an adjustment of an operating characteristic of the wind turbine and may in particular involve an increase of the nominal output power of the wind turbine, which may be termed "uprating". This may for example be achieved by allowing the wind turbine to operate with higher torques and/or higher rotational speeds of the wind turbine rotor. While such uprating of the wind turbine results in an uprated nominal power output that is higher than the power output prior to the uprating, such uprating may cause several problems. For example, the currents in power cables in the wind turbine that are used to transport the generated electrical power increases for higher output powers. This may in turn result in a temperature increase within the cables. Such increased temperature may result in increased wear on the cable insulation that may further create a risk of failure and in the worst case of fire. If the risk of cable failure is too high, it may not be possible to uprate the wind turbine.
To avoid such problems, additional cables may be provided together with the upgrade to allow for higher current transport capabilities. Alternatively, the existing cables may be exchanged with cables having a higher current capacity. As a further alternative, the cables may already be designed with a higher current rating when manufacturing the wind turbine, thus providing additional spare margin to allow future uprates. However, such solutions generally result in a higher effort, are costly, and may further provide unused spare capacity.

SUMMARY

Accordingly, there is a need to mitigate at least some of the drawbacks mentioned above and to provide a solution that allows an uprating of the wind turbine without the need to replace or supplement the existing cables.
This need is met by the features of the independent claims. The dependent claims describe embodiments of the invention.
According to an aspect, a method of operating a wind turbine is provided, wherein the wind turbine comprises a power generation system configured to generate electrical power from rotational mechanical energy and one or more electrical cables configured to transport the electrical power generated by the power generation system (e.g., to a load, a collector grid, a power grid or the like). The one or more electrical cables are associated with a cable temperature threshold for a cable temperature of the one or more electrical cables. The method comprises obtaining a measured component operating parameter of a component of the power generation system, wherein the measured component operating parameter and the cable temperature are related by a temperature relationship.
It further comprises comparing the measured component operating parameter to a component operating parameter threshold, wherein the component operating parameter threshold is derived from the cable temperature threshold and the temperature relationship. Additionally or alternatively, the method comprises comparing an estimated cable temperature that is estimated from the measured component operating parameter and the temperature relationship to the cable temperature threshold. If the comparison indicates that the respective threshold (i.e., the component operating parameter threshold or the cable temperature threshold, respectively) is met or exceeded, a mitigation action is taken to keep stable or reduce the cable temperature.
Such method may allow operating of the wind turbine with an output power that is higher than the nominal output power of the wind turbine when it was installed. In particular, the wind turbine may be an uprated wind turbine that has an increased nominal output power compared to the nominal output power of the wind turbine prior to the uprating. Furthermore, such method does not require the installation of additional temperature sensors along the electrical cables, since an over-temperature condition of the electrical cables is monitored by measuring the component operating parameter of a component of the power generation system. Thus, an existing sensor may be used for such measurement, and a conclusion may be drawn on whether the cable temperature is within limits or exceeds safe operating limits, e.g. the cable temperature threshold. As indicated above, this may be detected by deriving a threshold or limit for the measured component operating parameter from the cable temperature threshold, or equivalently by estimating the cable temperature from the measured component operating parameter and comparing this estimated cable temperature to the cable temperature threshold. Both ways may be employed simultaneously, which may further improve reliability and consistency. The temperature relationship may be made available at the wind turbine, it may for example be stored in a wind turbine controller, for example as parameters of a respective function, as lookup tables or the like. In the former case, only the component operating parameter threshold may need to be provided in the wind turbine, e.g. to a wind turbine controller, which may then simply compare the measured component operating parameter to the stored threshold to detect if the taking of the mitigation action is necessary to keep the cable temperature within safe operating limits.

The present method may thus differ from the usual approach to provide a sophisticated model of the electrical cables and to monitor the power flow through the cables in order to precisely model the cable temperature. Surprisingly, it has been found that by the unusual approach of present method, a rather precise temperature estimation becomes possible and an efficient protection of the electrical cables from an over-temperature condition may be achieved. This approach simplifies the cable protection and may easily be integrated into an existing wind turbine control, for example into an existing over-temperature protection system. This may allow an efficient, cost-effective and safe uprating of the wind turbine.

It should be clear that the component of the power generation system is different from the one or more electrical cables.

In an embodiment, the component operating parameter is a component temperature. Using such component temperature as the component operating parameter has the advantage that the dynamics of such parameter may be similar to the dynamics of the cable temperature. Accordingly, the component temperature may quite precisely reflect the actual cable temperature, so that an effective over-temperature protection for the one or more electrical cables may be achieved by the method. Also, such component temperature may experience an impact from environmental conditions (such as environmental temperatures) that is similar to the impact on the actual cable temperature. It may thus become possible to provide over-temperature protection without the need to additionally take environmental parameters, such as the ambient temperature, into account. Other component operating parameters may be employed in different embodiments, such as an electrical output power of the power generation system; however, although such output power may be indicative of the cable temperature, the cable temperature will generally depend on further parameters, such as ambient temperature, the duration over which the output power is provided and the like. Using the component temperature as component operating parameter may thus further facilitate the performing of the method.

For example, the component may be a component of a generator of the power generation system. It has been found that it is particularly beneficial if the component is a winding of the generator and the component operating parameter is a winding temperature. The cable temperature may correlate particularly well with the winding temperature, so that by employing the winding temperature of the generator as the component operating parameter, a particularly accurate detection of an over-temperature condition of the one or more electrical cables may be achieved. The generator winding may for example be a stator winding and/or a rotor winding of the generator.

The cable temperature and the cable temperature threshold may be associated with a predetermined position along the one or more electrical cables. Position refers to a longitudinal position along the length of the cable. Preferably, the position corresponds to a hot spot at which the one or more cables reach the highest temperature during operation of the wind turbine. By providing the over-temperature protection of the method for such position, it may be ensured that the whole cable is protected from over-temperature conditions while performing of the method may be facilitated. If it is ensured by the protection method that the mitigation action is taken when the respective temperature threshold is met or exceeded, so that it is ensured that at the hot spot, the cable temperature is controlled to stay below the cable temperature threshold, the temperature of the cable over its entire length will stay below the cable temperature threshold. Knowledge on the position of such hot spot may be obtained from testing, for example on a referenced wind turbine upon installation of an upgrade, or at the respective wind turbine at which the method is performed, e.g. by employing temperature sensors positioned at different locations along the length of the cable.

As an example, the position may be located adjacent to or at a connection of the one or more electrical cables to a generator of the power generation system, e.g. at respective generator terminals. At such position, it may be difficult to change the cable arrangement and the one or more electrical cables may be located relatively close to each other, so that a hot spot of the cable temperature may develop. The hot spot may refer to a maximum temperature.

In an exemplary implementation, the mitigation action may comprise a curtailment of an active power output of the wind turbine. By such curtailment, the currents present in the one or more electrical cables may be reduced, so that the heat development in the one or more electrical cables is reduced. By such mitigation action, an efficient temperature reduction of the one or more electrical cables may be achieved, so that they are protected from over-temperatures. It should be clear that if the mitigation action is taken upon the respective temperature threshold being reached, the cable temperature may for a short period of time overshoot the cable temperature threshold before cooling down again to below the cable temperature threshold due to the reduced current magnitude. The control that is employed may be a simple binary control that, e.g., curtails the active power output upon the temperature threshold being reached, or a more sophisticated control, such as a PI or PID controller may be used.

In an embodiment, the wind turbine comprises a protective function for reducing a risk of an over-temperature condition of the component of the power generation system. Such protective function may for example be a high temperature ride through (HTRT function), which may be configured to ensure that during high ambient temperature conditions, the component does not overheat. The protective function may compare the measured component temperature to a second component temperature threshold associated with the component and may take the mitigation action based on the comparison. This may correspond to the general operation of such protective function, e.g. to general HTRT operation. The derived component temperature threshold that has been derived for the one or more electrical cables may be provided to the protective function to perform the respective comparison and to take the respective mitigation action based on the comparison. Accordingly, such existing protective function for the component of the power generation system may be employed to also provide the over-temperature protection for the one or more electrical cables. The protective function may in particular monitor both, the component temperature threshold derived from the cable temperature threshold and the second component temperature threshold for the component itself. The mitigation action may thus be taken when the lower of the two thresholds is reached or exceeded. Providing over-temperature protection may thereby further be facilitated, since the one or more electrical cables may be protected by simply setting a new temperature threshold for such protective function.

It is preferred that in the method, the cable temperature is not measured and/or an ambient temperature (e.g. environmental temperature outside the wind turbine nacelle) is not considered in the respective comparison. The comparison may not be based on a measured output power of the power generation system. In other words, the deriving of the component operating parameter threshold from the cable temperature threshold, and/or the estimation of the cable temperature from the measured component operating parameter, may not employ an actually measured cable temperature, may not make use of any such ambient temperature, and/or may not employ measured output power. Surprisingly, it has been found that the temperatures protection may be facilitated and that even better results may be achieved by not using a complex model for modeling the cable temperature but by using a different approach and only making use of the measured component operating parameter, in particular measured component temperature.

In some wind turbines, the one or more electrical cables may comprise plural electrical cables that form a cable bundle at a position along the plural electrical cables. One or more cable separators may be installed at the position of the cable bundle (e.g., a common separator or individual separators). The one or more cable separators may be configured to increase the spacing between the electrical cables at the position of installation. The position of installation may be different from a position of the plural electrical cables for which the comparison is performed. In particular, the position may be different from the above-mentioned position of the hot spot along the one or more electrical cables. An additional protection from over-temperature conditions may thus be achieved for such locations at which the plural electrical cables form a cable bundle.

For the central cables of such bundle, the transportation of heat and thus the cooling may be impeded by the surrounding cables, which likewise generate heat during operation. Accordingly, by installation of the one or more cable separators, the cooling of such central cables may be improved and a temperature increase, in particular for the central cables, during operation may be limited. Wear on cable insulation, which generally increases with temperature, and the risk of failure and risk of fire at such location may thereby be reduced or avoided. It should be clear that respective one or more cable separators may be installed at several positions along the length of the plural electrical cables, e.g. at each position at which a respective cable bundle is formed. A cable bundle may refer to a spatial arrangement of the plural electrical cables in which the plural electrical cables are in physical contact with each other and/or in which in particular one or more centrally arranged electrical cables are surrounded by further electrical cables. Additional protection for positions at which heat potentially builds up may thus be achieved.

According to a further aspect, a method of calibrating a temperature control for one or more electrical cables of a wind turbine is provided. By the method, a relationship is determined between a component operating parameter of a component of a power generation system of the wind turbine and a cable temperature of the one or more electrical cables. The one or more electrical cables are configured to transport electrical power generated by the power generation system, e.g. to a load, a utility grid, a collector grid or the like. The method comprises obtaining a measured component operating parameter of the component of the power generation system, obtaining a measured cable temperature measured at a position of the one or more electrical cables, wherein the obtaining of the measured component operating parameter and the obtaining of the measured cable temperature are performed repeatedly for different operating conditions of the wind turbine (both measurements may for example be obtained (substantially) simultaneously for different operating conditions), and deriving the relationship between the component operating parameter and the cable temperature from the measured component operating parameter and the measured cable temperature. By such method, a precise estimation of the relationship between the component operating parameter and the cable temperature may be made. Such method may result in similar advantages as outlined above. In particular, the deriving of the relationship allows an estimation of the cable temperature without measuring it, or correspondingly allows the estimation of a component temperature threshold from a cable temperature threshold for the cable temperature. A direct measurement of the cable temperature is thus not necessary. The method may accordingly allow an over-temperature protection of the one or more electrical cables without installing sensors. Equipment may thus be saved, and the complexity reduced. In particular, the method may result in a reduced effort and reduced costs. The method may also be termed "calibration method", since it provides a calibration between an actually measured value (the component operating parameter, preferably component temperature) and the actual value of a desired parameter (cable temperature) that is not measured. Different operating conditions may for example refer to a different ambient temperature, a different nacelle temperature, different wind conditions and the like.

The method may be performed as part of the method of operating the wind turbine. For example, it may be performed as a calibration prior to starting the operation of the wind turbine, e.g. as part of an upgrading (in particular an uprating) of the wind turbine. It should however be clear that such calibration method may also be performed on a different wind turbine, and the derived relationship may be employed when operating a different wind turbine of the same general type or the same type of model having the same type of upgrade for which the respective relationship is valid as well.

In an embodiment, the relationship is a linear relationship. The deriving of the relationship may comprise the determining of one or more parameters of a respective linear function. Preferably, the slope of the linear function and possibly an intercept of the linear function are determined. Such linear relationship may further facilitate the calibration method as well as the operation method as it allows a relatively simple mapping between the actually measured parameter and the cable temperature. More complex relationships may be used in different embodiments, such as a polynomial function, or other types of suitable functions.

In an embodiment, the component operating parameter is a component temperature, and the obtaining of the measured component temperature comprises obtaining a maximum value of the measured component temperature after operating the wind turbine at an uprated nominal output power for a predetermined amount of time. Obtaining of the measured cable temperature may comprise obtaining a maximum value of the measured cable temperature after operation of the wind turbine at the uprated nominal output power for the predetermined amount of time. The maximum value of the measured component temperature and the maximum value of the measured cable temperature may be obtained repeatedly for different operating conditions of the wind turbine. Such different operating conditions may again be a different ambient temperature, such as a different environmental temperature outside the nacelle of the wind turbine, or a temperature inside the nacelle of the wind turbine, and the like. The maximum value of the measured component temperature and of the measured cable temperature may be obtained (substantially) simultaneously after operation of the wind turbine for the period of time at the uprated nominal output power. The predetermined amount of time may be chosen such that the operation corresponds to a (quasi) steady state operation of the wind turbine at the uprated nominal output power.

During such operation, the temperature of the component, and likewise the temperature of the one or more electrical cables, may approach a stable temperature value, in particular a maximum (critical) temperature. Such maximum temperature is the temperature having the highest relevance for over-temperature protection. Further, it has been found that the respective maximum values of the component and cable temperatures show a good correlation. This allows a rather precise estimation of a reliable relationship from these obtained maximum values. Consequently, by employing such relationship, a deriving of the component temperature threshold and/or an estimation of the cable temperature that is precise at the relevant temperature range (i.e. at high temperatures) is achieved. This is particularly beneficial, since the mitigation action generally only has to be taken when the maximum temperature value is approached. The maximum value being used may not be a single data point corresponding to a maximum absolute temperature value, but may be a value that has been averaged over a certain time period, or may be the value that the temperature development approaches asymptotically. Uprated nominal output power may refer to the actually rated output power of the wind turbine after the original nominal output power of the wind turbine has been uprated to a higher value, e.g. when upgrading the wind turbine.

According to a further aspect, a method of upgrading a wind turbine with a performing-enhancing upgrade is provided. The performance-enhancing upgrade is configured to increase the power output of the wind turbine compared to a wind turbine without the performance-enhancing upgrade (in other words, the performance-enhancing upgrade may uprate the output power of the wind turbine, and thus result in an increased uprated nominal output power). The method comprises installing the performance-enhancing upgrade on the wind turbine and performing a calibration according to any of the calibration methods disclosed herein to determine a relationship between a component operating parameter of a component of a power generating system of the wind turbine and a cable temperature of one or more electrical cables of the wind turbine. Such method may allow a safe operation of the wind turbine at higher output powers without the need to replace the electrical cables or install additional electrical cables during the upgrade. Upgrading of the wind turbine may in particular refer to modifying a wind turbine control by enabling an overrated operation of the wind turbine, wherein during the overrated operation, the wind turbine generates an electrical power output above a (original) nominal rated power output of the wind turbine prior to the upgrading. This may involve increasing a nominal rotational speed and/or nominal operational torque of the wind turbine.

The method may further comprise operating the wind turbine according to any of the operation methods disclosed herein after performing the calibration. In some implementations, the calibration method and the operation method may be performed by the same wind turbine. In other implementations, the calibration method may be performed on an upgraded wind turbine, and a different wind turbine may be provided with a corresponding upgrade and may then operate using the calibrated relationship, without performing the calibration method on this particular wind turbine. Providing an operation of plural wind turbines that implement a respective cable over-temperature protection may thus be achieved without the need to provide the calibration method for each individual wind turbine.

According to a further aspect, a wind turbine control system configured to control the operation of a wind turbine is provided, wherein the wind turbine comprises a power generation system configured to generate electrical power from rotational mechanical energy and one or more electrical cables configured to transport the electrical power generated by the power generation system, wherein the one or more electrical cables are associated with a cable temperature threshold for a cable temperature of the one or more electrical cables, wherein the wind turbine control system is configured to perform any of the methods disclosed herein. It should be clear that a control system may be provided that operates the wind turbine in accordance with any operating method disclosed herein, and that the same control system or a different control system may be provided to perform any of the calibration methods disclosed herein. By such control system, advantages similar to the ones outlined further above may be achieved.

According to a further aspect, a wind turbine comprising such control system is provided.

According to a further aspect, a computer program for operating a control system of a wind turbine is provided, wherein the wind turbine comprises a power generation system configured to generate electrical power from rotational mechanical energy and one or more electrical cables configured to transport the electrical power generated by the power generation system, wherein the computer program comprises control instructions which, when executed by a processing unit of the control system, cause the processing unit to perform any of the methods disclosed herein. The computer program may be provided on a volatile or non-volatile data carrier or storage medium.

The wind turbine may be an offshore wind turbine, in particular a floating offshore wind turbine, and the method of operating the wind turbine may further comprise generating, by the wind turbine, electrical power and/or electrical energy during operation, transmitting at least a part of the generated electrical power and/or of the electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction; and supplying at least a part of the electrical power and/or of the electrical energy to an electrical utility grid, in particular to an onshore electrical utility grid. With such method, electrical power may be provided to an onshore site while the one or more electrical cables may be protected from an overtemperature condition.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

The control system may in particular be configured to carry out any of the method steps described herein, and the method may be carried out by a control system or wind turbine having any of the configurations described herein.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1 is schematic drawing showing a wind turbine including a control system according to an embodiment.

Fig. 2 is a flow diagram illustrating a method of calibrating a temperature control for one or more electrical cables of a wind turbine according to an embodiment.

Fig. 3 is a schematic diagram illustrating temperature measurements that may be obtained when performing the method of Fig. 2.

Fig. 4 is a schematic diagram illustrating a temperature relationship that may be derived when performing the method of Fig. 2.

Fig. 5 is a flow diagram illustrating the deriving of a component temperature threshold based on the temperature relationship derived when performing the method of Fig. 2.

Fig. 6 is a flow diagram illustrating a method of operating a wind turbine according to an embodiment, wherein the method may employ the temperature relationship derived in the method of Fig. 2 and/or the component temperature threshold derived in the method of figure 5.

Fig. 7 is schematic drawing showing a bundle of electrical cables of a wind turbine.

Fig. 8 is a schematic diagram illustrating a temperature distribution in a bundle of electrical cables of a wind turbine.

Fig. 9 is schematic drawing showing a bundle of electrical cables of a wind turbine with a cable separator mounted to one of the cables according to an embodiment.

Fig. 10 is a schematic diagram illustrating a temperature distribution in a bundle of electrical cables of a wind turbine when a cable separator is mounted in accordance with an embodiment.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

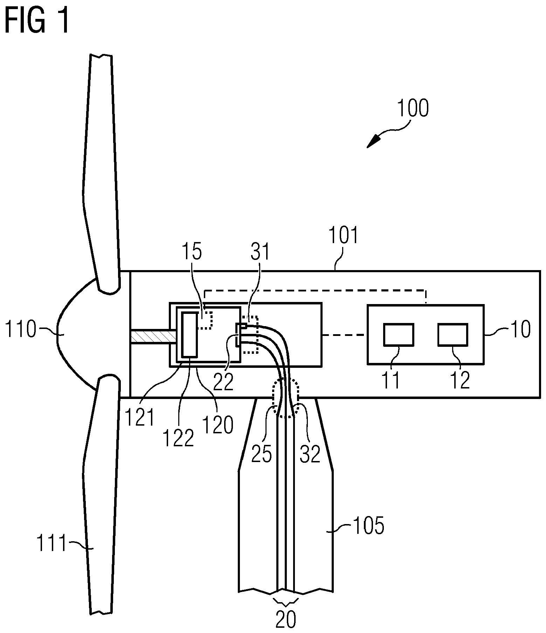

Fig. 1 schematically illustrates a wind turbine 100 that comprises a wind turbine tower 105 on which nacelle 101 is mounted. Wind turbine 100 comprises a wind turbine rotor 110 including rotor blades 111. Wind turbine 100 further comprises an electric power generation system 120, which may include a generator 121 mechanically coupled to the rotor 110, e.g. directly or via an intervening gearbox. Power generation system 120 may further include a converter and optionally a transformer (not shown). Power generating system 120 may have any known configuration; it may for example implement a full converter topology or a doubly-fed induction generator (DFIG) topology. Wind turbine 100 may operate in any known manner and may be an onshore or offshore wind turbine.

Fig. 1 schematically illustrates plural electrical cables 20 of wind turbine 100. These are in the present example connected at terminal 22 to the generator 121. If a power converter and/or transformer is installed in nacelle 101 as part of the power generation system 121, the cables 20 may comprise respective cable sections that for example connect generator 121 to a respective converter, that connect the power converter to the transformer, and/or that provide a connection from the transformer into the wind turbine tower 105. At one or more positions along cables 20, a bundle 25 where the cables are very close to each other and may touch each other may be formed, such as at location 32.

Power generation system 120 includes a component 122, which in the present example is a generator winding of generator 121. It may be another type of component, in particular a component that has an operating parameter that is correlated with the output power of the wind turbine, such as a component temperature or the like.

When originally installed, wind turbine 100 may have a nominal power rating. The electrical cables 20 may thus be dimensioned to transport electrical power in accordance with the original nominal power rating. Wind turbine 100 further comprises the control system 10, which may include a wind turbine controller. Control system 10 may implement one or more protective functions, for example a temperature protection function for a component 122 of the power generation system 120. An example is a high temperature ride through (HTRT) function for generator 121. A measuring unit 15 may be provided that measures a temperature of the component 122 of the power generation system 120, which component may be a winding of generator 120. Control system 10 may obtain the respective winding temperature measurements (a respective signal) and may take a mitigation action if the measurement indicates that the generator winding temperature is too high. The mitigation action may consist of or may include the curtailing of the electrical power production by wind turbine 100. The control system 10 may for example pitch the rotor blades 111 out of the wind to reduce power production and to thereby reduce the temperature of the component 122 (e.g., of the generator winding). This may be particularly advantageous if wind turbine 100 is uprated and the generator 121 is caused to produce a higher power output than the original nominal power output, which may result in excessive heat production by generator winding 122.

Wind turbine 100 may for example be upgraded by changing operating characteristics in accordance with which control system 10 controls the operation of the wind turbine 100, such as by allowing higher rotational speeds of wind turbine rotor 110, allowing higher torque values and the like. When operating at such uprated output power higher than the original nominal output power, electrical cables 20 may be caused to transport an electrical current higher than the current for which they were originally dimensioned. This may result in excess heat production for example at position 31 where the electrical cables 20 are connected to the terminal 22 of generator 121, or at position 32 where the cables form bundle 25. As described in more detail further below, control system 10 may be configured in accordance with embodiments to reduce the risk of excessive heating of electrical cables 20 at such positions and may thus provide an efficient over-temperature protection.

Control system 10 may comprise a processing unit 11 and a memory 12 that stores control instructions which, when executed by processing unit 11, perform any of the methods disclosed herein, in particular any of the operating methods and/or calibration methods. The processing unit 11 may be any type of processor, such as a microprocessor, an application specific integrated circuit, a digital signal processor or the like. Memory 12 may include volatile and non-volatile memory, in particular RAM, ROM, EEPROM, FLASH-memory, hard disc drives and the like. Control system 10 may further include respective input/output interfaces for receiving signals to obtain one or more operating parameters, in particular temperature measurements, e.g. by unit 15, and for controlling components of the wind turbine. Control system 10 may further include a user interface and other communication interfaces.

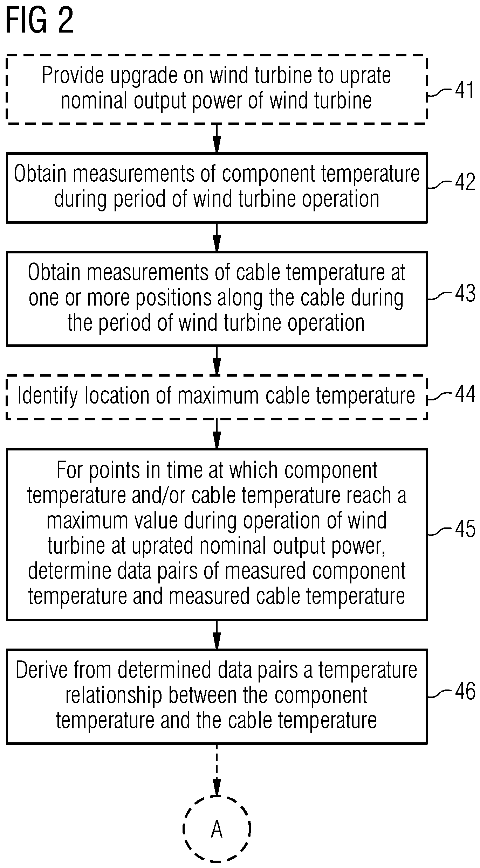

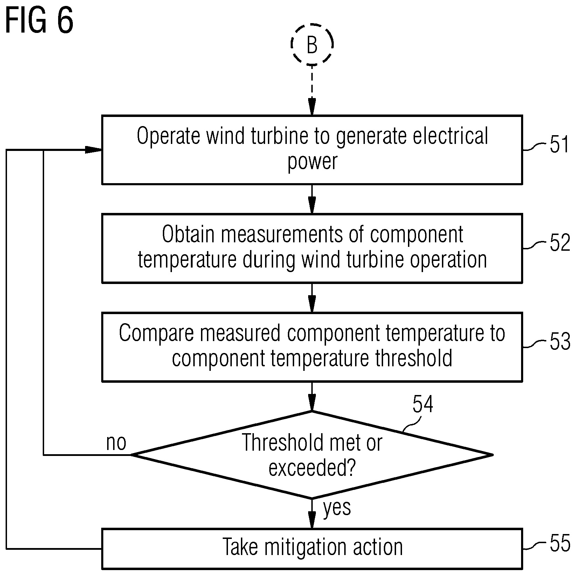

Control system 10 operates to limit the cable temperature at one or more respective positions 31, 32 during operation in order to protect the cables 20 from an over-temperature condition. For this purpose, control system 10 employs the temperature measurement by measuring unit 15. It has been found that this temperature is related to the cable temperature at a respective position via a temperature relationship. This relationship may be obtained via respective measurements, as described with respect to Fig. 2 further below. From the relationship and a temperature threshold for the cable temperature, it is possible to derive a component temperature threshold for the component 122, e.g. for the generator winding, which corresponds to the cable temperature threshold. The component temperature threshold may for example be stored in memory 12 and may be used during operation for providing over-temperature protection for cables 20. Control system 10 may for example compare the measured component temperature with the derived component temperature threshold to detect an over-temperature condition for cables 20 and may take the respective mitigation action. Alternatively, or additionally, it is also possible to store the relationship in memory 12 and to use it to derive from the component temperature measured by unit 15 an estimate for the cable temperature at the respective position, and to then compare the estimated cable temperature to the cable temperature threshold. An exemplary implementation of such operation method is described in more detail further below with respect to Fig. 6.

Fig. 2 illustrates a flow-diagram of a respective calibration method in accordance with an embodiment. In step 41, the wind turbine 100 is provided with an upgrade, e.g. modification of an operating characteristic, to uprate the nominal output power of the wind turbine. The uprated wind turbine is operated in step 42, and measurements of the temperature of the wind turbine component 122 are obtained from measuring unit 15, in particular during a time period. In step 43, measurements of cable temperature are obtained from one or more positions (preferably plural) along the cable during the period of wind turbine operation. For this purpose, temperature sensors may be provided at different positions along the length of cables 20, for example at positions 31, 32 and others. The temperature may in particular be a surface temperature of the one or more electrical cables 20. Measurements of component temperature and cable temperature are thus available for the same time period. Further parameters may be measured, in particular the output power of the wind turbine and optionally ambient temperature (in particular the environmental temperature outside the nacelle). The method may however be used without such additional measurements.

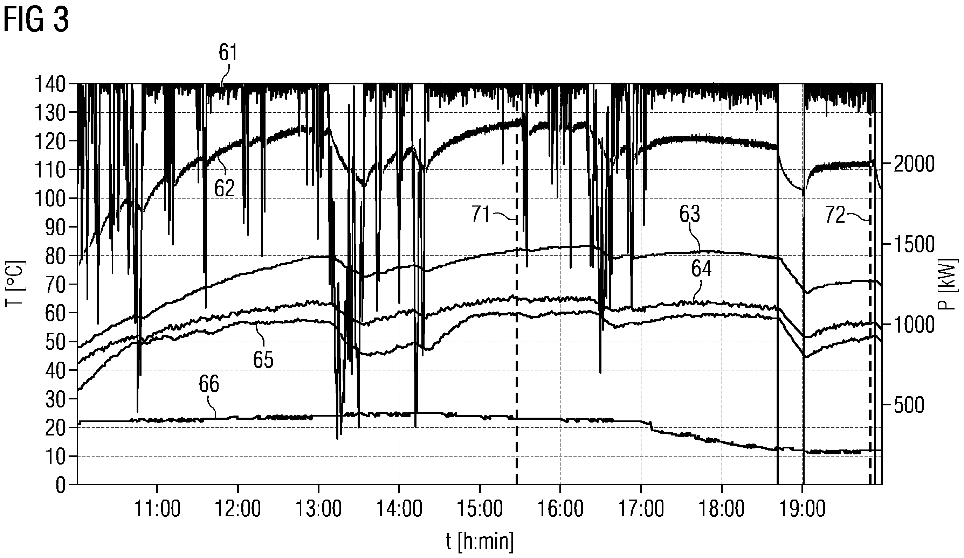

The data obtained from such measurements is illustrated in Fig. 3, which shows for a time range of 10 hours measurements of the output power of wind turbine 100 (curve 61) as well as the component temperature 62 measured by unit 15. Further shown are the measured cable temperature at position 31 in curve 63, as well as cable temperature measurements taken at two other positions along cables 20 in curves 64 and 65. Curve 66 shows the ambient temperature. When wind turbine 100 operates for prolonged periods of time at the uprated nominal output power of 2,500 kW (right-hand axis), it can be seen that the winding temperature 62 raises asymptotically to a maximum value between 110 and 130°C (left-hand axis). Upon a drop in output power, the winding temperature 62 decreases again. Depending on the operating conditions, such as ambient temperature 66, the maximum values of winding temperature 62 that are reached asymptotically do differ.

It has been found that there is a particularly good correlation between these maximum temperature values of winding temperature 62 and the corresponding maximum temperature values of the cable temperature 63, which likewise asymptotically reaches maximum values after prolonged operation of the wind turbine at the uprated nominal output power. Further, it can be taken from the diagram that the cables 20 reach the highest cable temperature at the position 31. The presence of such hot spot may be identified in step 44. By basing the over-temperature protection on the cable temperature at the respective position 31 at which the highest temperatures are reached, an efficient over-temperature protection can be achieved for the whole length of cables 20.

In step 45, data pairs of the measured component temperature 62 and the measured cable temperature 63 (i.e. for the position of the hot spot) are determined from the measurements for points in time at which the component temperature 62 and/or the cable temperature 63 reaches (asymptotically) a maximum value during the operation of the wind turbine at the uprated nominal output power. Reaching of the maximum value may herein be understood as encompassing an asymptotical reaching of the maximum value, wherein the maximum value may not be an isolated data point but may be an average of several subsequent data points to reduce noise. Fig. 3 schematically illustrates a first data point 71 and a second data point 72, for which a respective data pair may be formed. This is done for different operating conditions, e.g. for different ambient temperatures, so that different maximum temperature values are reached.

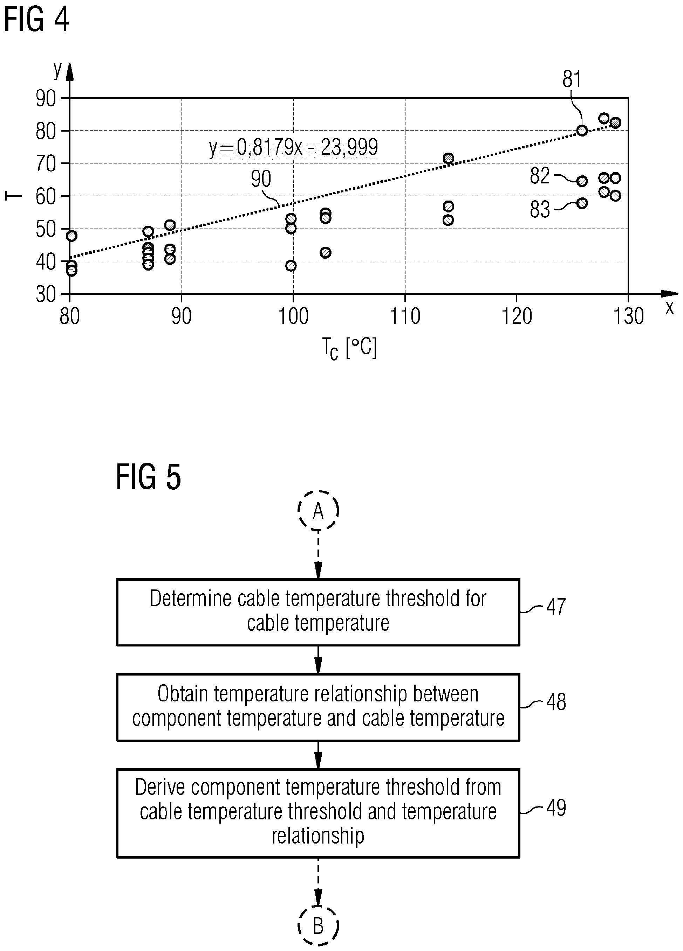

Fig. 4 is a diagram that schematically illustrates respective data pairs 81 for the component temperature $T_c$ (x-axis) and the cable temperature 63 (y-axis). It has been found that the relationship 90 between the component temperature and the cable temperature can be approximated by a linear function as shown in Fig. 4. Besides showing respective data points for the cable temperature 63 at the position 31, Fig. 4 also illustrates data points 82 for the cable temperature 64 and data points 83 for the cable temperature 65 measured at different positions. Although for these data points, a correlation that may be approximated by linear functions are likewise present, it can readily be seen that the correlation is stronger for the cable temperature 63 (data points 81).

In step 46, from the determined data pairs 81, the temperature relationship 90 is derived. When modeled as a linear function, the slope and optionally the intercept of the linear function may be determined. Fig. 4 shows the linear function with its parameters for the linear relationship 90. Given this relationship and the component temperature $T_c$, it accordingly becomes possible to derive a respective cable temperature for the respective cable position. Since the highest temperatures of the cables 20 are achieved when the wind turbine operates at the maximum output power for longer periods of time, at which the relationship 90 provides a quite precise estimation of the cable temperature, an efficient over-temperature protection may be implemented by using the relationship 90 without the need to actually measure the cable temperature.

The method of Fig. 2 may continue with the steps of Fig. 5. In step 47, a cable temperature threshold is determined for the cable temperature of the one or more electrical cables 20. The cable temperature may in particular be relate to the surface temperature of the cable. If the cable temperature should be kept below 90°C, the surface temperature of the cable should for example be kept below 84°C, which may be set as the cable temperature threshold. In step 48, the temperature relationship between the component temperature and the cable temperature is obtained. The relationship may be obtained by retrieving it from a memory in which, for example, the parameters of the linear function are stored, or may be obtained by performing the method of Fig. 2. In step 49, the component temperature threshold is derived from the cable temperature threshold and the temperature relationship. Taking the example of Fig. 4, the linear relationship is $T_{cable} = 0.82 \ast T_c - 24°C$ (rounded) . The component temperature threshold may thus be derived from the cable temperature threshold $Thresh_{cable} = 84°C$ to

$$Thresh_c = (84°C + 24°C)/0.82 = 132°C$$

Such component temperature threshold $Thresh_c$ may then be used for operating the wind turbine 100. By keeping the component temperature as measured by measuring unit 15 below the component temperature threshold, it may be ensured that a mitigation action is taken if the cable temperature reaches or exceeds the cable temperature threshold without actually measuring the cable temperature.

Fig. 6 schematically illustrates a method of operating a wind turbine which employs a respective component temperature threshold. The methods of Figs. 2 and 5 may accordingly be performed prior to the method of Fig. 6 to obtain the component temperature threshold. Such component temperature threshold may be stored in memory 12 of control system 10 and may be retrieved therefrom during operation. In step 51, the wind turbine is operated to generate electrical power. In step 52, measurements of the component temperature are obtained during wind turbine operation. They may for example be received as an analogue or digital signal from the measuring unit 15. In step 53, the measured component temperature is compared to the component temperature threshold that has been obtained on the basis of the derived relationship 90. Such comparison may be made by comparing respective analogue or digital data values or signals, or may be performed by a controller, such as a PI or PID controller. In step 54, it is checked if the threshold is met or exceeded. If the measured component temperature is still below the component temperature threshold, the method continues in step 51 with the operation of the wind turbine. If the threshold is met or exceeded in step 54, a mitigation action is taken in step 55. As mentioned above, this may involve the control system 10 reducing the power output of the wind turbine. Power output as used herein may in particular refer to active power output. The method then returns to step 51. The method may accordingly be performed continuously during operation of the wind turbine and may thus continuously measure and check if the component temperature stays below the component temperature threshold as derived from the relationship, and thus ensures that the cable temperature stays within safe operating limits. Upon taking the mitigation action in step 55 and the temperature dropping again below the threshold, the active power output of the wind turbine may again be (slowly) increased until the threshold is again met in step 54 (e.g., by a ramp or the like). Alternatively, a respective controller (e.g., PID) may use the respective component temperature threshold as a target and may control the output power to stay as close as possible to the target.

The method of Fig. 2 and the method of Fig. 6 may be performed by different wind turbines. The temperature relationship derived by the method of Fig. 2 may for example be valid for all wind turbines of the same model and corresponding operating parameters ratings. The method may thus be performed on a reference wind turbine, and the derived relationship may be stored. While the temperature measurements of steps 42 and 43 are generally performed on the wind turbine, the evaluation steps 45 and 46 may also be performed remote therefrom. The method of Fig. 5 may likewise be performed by such reference wind turbine or remote therefrom, and the respective component temperature threshold may be stored. When operating a wind turbine of the same model, the wind turbine controller may be provided with the component temperature threshold and may operate in accordance therewith according to the method of Fig. 6. While the method of Figs. 2 and 5 may thus be performed only once for one wind turbine, the method of Fig. 6 may be performed at a plurality of different wind turbines. It is however also possible that the respective calibration method of Fig. 2 and Fig. 5 are performed for each wind turbine prior to starting operation of the respective wind turbine. A more precise estimation of the respective relationship may thus be achieved.

Several steps, such as steps 41 and 44 of the method of Fig. 2 are further optional. The method of Fig. 5 is likewise optional and may not form part of the method of Fig. 2. For example, the relationship determined in the method of Fig. 2 may be provided to the wind turbine and stored in its controller memory, and the methods of Fig. 5 and 6 may be performed on the wind turbine based on the stored temperature relationship. As another example, the steps of Fig. 5 may not be performed at all. The temperature relationship derived by the method of Fig. 2 may be stored in the memory 12 of the wind turbine control system 10. Instead of employing a component temperature threshold, the control system 10 may obtain the temperature measurements from measurement unit 15 and may estimate therefrom the cable temperature 63 using the stored relationship 90. Instead of steps 53 and 54, the estimated cable temperature may then be compared to the cable temperature threshold to determine if the mitigation action of step 55 is to be taken or not. Accordingly, several variations of the method are conceivable.

The method of Fig. 6 may for example be implemented in the high temperature ride through (HTRT) function of the control system 10 by simply adding the component temperature threshold $Thresh_c$ as an (additional) threshold. An efficient over-temperature protection for the one or more electrical cables 20 may thus be achieved while only requiring small modifications of the wind turbine control.

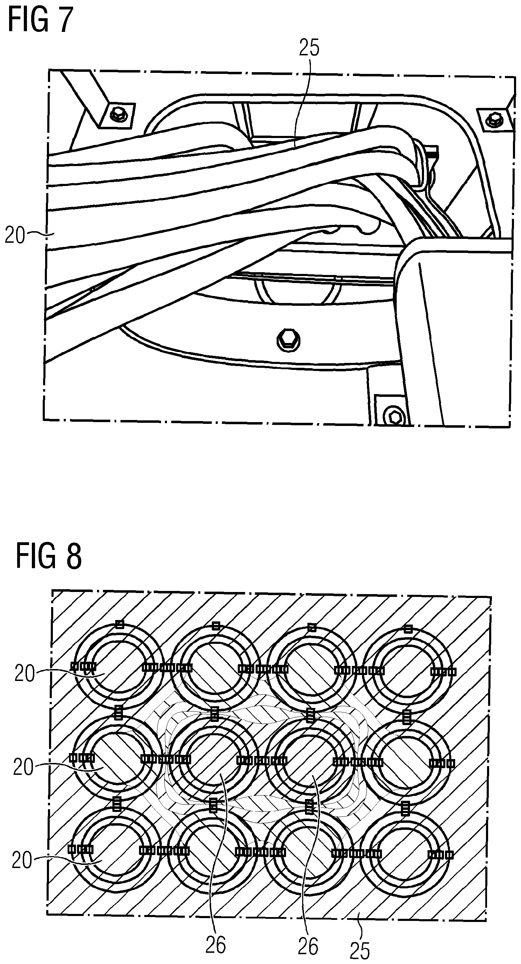

Although the relationship 90 may be based on the temperature data obtained for the position 31 at which the cables 20 reach the highest temperature during operation (hot spot), significant temperature increases may also occur at other positions, such as at position 32 where the bundle 25 is formed. Due to the uprated output power of the wind turbine 100, such temperature increase may result in the long run in damage to the cable insulation, and, upon excessive heating, in dangerous situations. An example of such bundle 25 is illustrated in Fig. 7, where the cables 20 pass through a relatively small opening and can thus not be routed with greater distances between them. Fig. 8 illustrates a simulated temperature distribution for such cable bundle 25. As can be seen, excessive heating occurs in the central cables 26, since the heat cannot be transported away efficiently due to the further surrounding cables 20. Over-temperature conditions may thus occur.

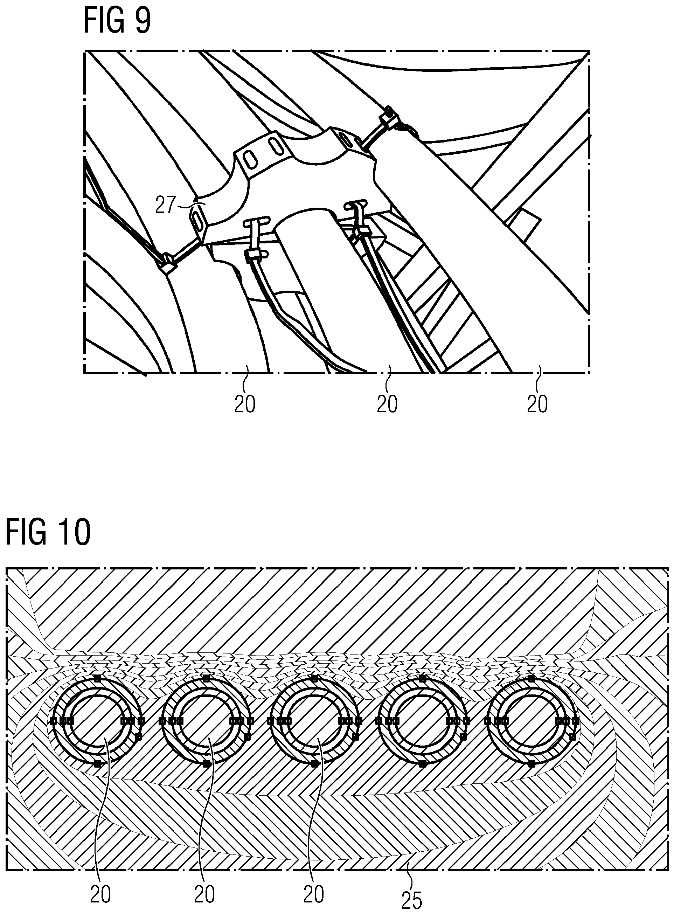

To further ensure that the cable temperature is kept within limits over the whole length of the cables, one or more cable separators 27 may be installed at the position 32 of bundle 25, as illustrated in Fig. 9. The installation of such cable separator may form part of the method of Fig. 2, it may for example be performed after step 41 of uprating the wind turbine. It may alternatively be performed prior to step 51 of Fig. 6, for example prior to starting the operation of the uprated wind turbine.

In the example of Fig. 9, the cable separator is positioned around a central cable 26 and ensures that a minimum distance is kept to adjacent electrical cables. Such minimum distance may be more than 1 cm, preferably at least 2 or 3 cm. The cable separator 27 of Fig. 9 is thus capable of spacing apart several cables. It includes two parts that are assembled around the cable and connected to each other, e.g. by using cable ties, which facilitates mounting. In alternative implementations, an individual cable separator 27 may be provided around each electrical cable 20, for example in the form of a ring having a radial extension of its annular section that corresponds to the desired minimum distance over which the cables should be spaced apart. Fig. 10 illustrates a respective temperature distribution of plural electrical cables 20 that are spaced apart by respective cable separators. A quite similar temperature distribution can thereby be achieved for each cable, and by choosing the distance appropriately, it may be ensured that during operation, a desired maximum cable temperature at the surface of the cable, such as the above-mentioned 84°C, is not exceeded. The one or more cable separators 27 may form part of the wind turbine 100 of Fig. 1, and may in particular be installed at position 32, e.g. at a feed-through between nacelle 101 and tower 105.

By the above-mentioned methods and configurations, the risk of cable over-heating may be reduced significantly while being able to operate the upgraded wind turbine with the uprated nominal power output. The hot spot of the electrical cables 20 may be identified and the temperature relationship, and optionally the component temperature threshold, may be tuned in a calibration phase for one wind turbine. The possibility to later apply the respective parameters to other wind turbines having a similar configuration further facilitates implementing the over-temperature protection and allows a fast and rather effortless implementation. In particular, using the above-described solution, the need to retro-fit or install additional temperature sensors, or even additional electrical cables does not arise.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1. A method of operating a wind turbine, wherein the wind turbine (100) comprises a power generation system (120) configured to generate electrical power from rotational mechanical energy and one or more electrical cables (20) configured to transport the electrical power generated by the power generation system (120), wherein the one or more electrical cables (20) are associated with a cable temperature threshold for a cable temperature of the one or more electrical cables (20), wherein the method comprises:

   - obtaining a measured component operating parameter of a component (122) of the power generation system (120), wherein the measured component operating parameter and the cable temperature are related by a temperature relationship (90);
   - comparing the measured component operating parameter to a component operating parameter threshold, wherein the component operating parameter threshold is derived from the cable temperature threshold and the temperature relationship (90), and/or comparing an estimated cable temperature that is estimated from the measured component operating parameter and the temperature relationship (90) to the cable temperature threshold; and
   - taking a mitigation action to keep stable or reduce the cable temperature if the comparison indicates that the respective threshold is met or exceeded.

2. The method according to claim 1, wherein the component operating parameter is a component temperature ($T_c$).

3. The method according to claim 1 or 2, wherein the component (122) is a component of a generator (121) of the power generation system (120), wherein preferably, the component (122) is a winding of the generator (121) and the component operating parameter is a winding temperature.

4. The method according to any of the preceding claims, wherein the cable temperature and the cable temperature threshold are associated with a predetermined position (31) at the one or more electrical cables (20), wherein the position preferably corresponds to a hot spot at which the one or more electrical cables (20) reach the highest temperature during operation of the wind turbine (100).

5. The method according to any of the preceding claims, wherein the mitigation action comprises a curtailment of an active power output of the wind turbine (100).

6. The method according to any of the preceding claims when dependent on claim 2, wherein the wind turbine (100) comprises a protective function for reducing a risk of an overtemperature condition of the component (122) of the power generation system (120), wherein the protective function compares the measured component temperature to a second component temperature threshold associated with the component (122) and takes said mitigation action based on the comparison, wherein the derived component temperature threshold derived for the one or more electrical cables (20) is provided to the protective function to perform the comparison with the respective component temperature threshold and to take the respective mitigation action based on the comparison.

7. The method according to any of the preceding claims, wherein the cable temperature is not measured and/or wherein an ambient temperature is not considered in the comparison.

8. The method according to any of the preceding claims, wherein the one or more electrical cables (20) comprise plural electrical cables that form a cable bundle (25) at a position (32) along the plural electrical cables, wherein one or more cable separators (27) are installed at the position (32) of the cable bundle (25), wherein the one or more cable separators (27) are configured to increase the spacing between the electrical cables (20) at the position of installation.

9. A method of calibrating a temperature control for one or more electrical cables (20) of a wind turbine (100), wherein a relationship (90) is determined between a component operating parameter of a component (122) of a power generation system (120) of the wind turbine (100) and a cable temperature of the one or more electrical cables (20), wherein the one or more electrical cables (20) are configured to transport electrical power generated by the power generation system (120), wherein the method comprises:

   - obtaining a measured component operating parameter of the component (122) of the power generation system (120) ;
   - obtaining a measured cable temperature measured at a position (31) of the one or more electrical cables (20), wherein the obtaining of the measured component operating parameter and the obtaining of the measured cable temperature are performed repeatedly for different operating conditions of the wind turbine (100); and
- deriving the relationship (90) between the component operating parameter and the cable temperature from the measured component operating parameter and the measured cable temperature.

10. The method according to claim 9, wherein the relationship (90) is a linear relationship, wherein deriving the relationship (90) comprises the determining of one or more parameters of a respective linear function.

11. The method according to claim 9 or 10, wherein the component operating parameter is a component temperature, and wherein the obtaining of the measured component temperature comprises obtaining a maximum value of the measured component temperature after operation of the wind turbine (100) at an uprated nominal output power for a predetermined amount of time, and

wherein the obtaining of the measured cable temperature comprises obtaining a maximum value of the measured cable temperature after operation of the wind turbine (100) at the uprated nominal output power for the predetermined amount of time,
wherein the maximum value of the measured component temperature and the maximum value of the measured cable temperature are obtained repeatedly for different operating conditions of the wind turbine.

12. A method of upgrading a wind turbine with a performance enhancing upgrade, wherein the performance enhancing upgrade is configured to increase a power output of the wind turbine (100) compared to the wind turbine (100) without the performance enhancing upgrade, wherein the method comprises:

- installing the performance enhancing upgrade on the wind turbine (100); and
- performing a calibration according to the method of any one of claims 9-11 to determine a relationship (90) between a component operating parameter of a component (122) of a power generation system (120) of the wind turbine (100) and a cable temperature of one or more electrical cables (20) of the wind turbine (100).

13. The method according to claim 12, wherein the method further comprises operating the wind turbine (100) according to any of claims 1-8 after performing the calibration.

14. A wind turbine control system configured to control the operation of a wind turbine, wherein the wind turbine (100) comprises a power generation system (120) configured to generate electrical power from rotational mechanical energy and one or more electrical cables (20) configured to transport the electrical power generated by the power generation system (120), wherein the one or more electrical cables (20) are associated with a cable temperature threshold for a cable temperature of the one or more electrical cables (20), wherein the wind turbine control system (10) is configured to perform the method according to any of the preceding claims.

15. A computer program for operating a control system of a wind turbine, wherein the wind turbine (100) comprises a power generation system (120) configured to generate electrical power from rotational mechanical energy and one or more electrical cables (20) configured to transport the electrical power generated by the power generation system, wherein the computer program comprises control instructions which, when executed by a processing unit (11) of the control system (10), cause the processing unit (11) to perform the method of any of claims 1-13.

FIG 1

# FIG 2

```
┌─ ─ ─ ─ ─ ─ ─ ─ ─ ─ ─ ─ ─ ─ ─ ┐
│   Provide upgrade on wind turbine to uprate   │ ─ 41
│       nominal output power of wind turbine        │
└─ ─ ─ ─ ─ ─ ─ ─ ─ ─ ─ ─ ─ ─ ─ ┘
                    ↓
┌─────────────────────────────┐
│  Obtain measurements of component temperature │ ─ 42
│        during period of wind turbine operation     │
└─────────────────────────────┘
                    ↓
┌─────────────────────────────┐
│   Obtain measurements of cable temperature at  │
│   one or more positions along the cable during  │ ─ 43
│         the period of wind turbine operation        │
└─────────────────────────────┘
                    ↓
┌─ ─ ─ ─ ─ ─ ─ ─ ─ ─ ─ ─ ─ ─ ─ ┐
│ Identify location of maximum cable temperature │ ─ 44
└─ ─ ─ ─ ─ ─ ─ ─ ─ ─ ─ ─ ─ ─ ─ ┘
                    ↓
┌─────────────────────────────┐
│         For points in time at which component      │
│  temperature and/or cable temperature reach a │
│       maximum value during operation of wind    │
│      turbine at uprated nominal output power,     │ ─ 45
│   determine data pairs of measured component  │
│  temperature and measured cable temperature │
└─────────────────────────────┘
                    ↓
┌─────────────────────────────┐
│  Derive from determined data pairs a temperature │
│      relationship between the component          │ ─ 46
│      temperature and the cable temperature       │
└─────────────────────────────┘
                    ↓
                  ( A )
```

FIG 3

EP 4 477 871 A1

## FIG 4

$y = 0,8179x - 23,999$

## FIG 5

A

| Determine cable temperature threshold for cable temperature | 47 |

| Obtain temperature relationship between component temperature and cable temperature | 48 |

| Derive component temperature threshold from cable temperature threshold and temperature relationship | 49 |

B

# FIG 6

(B)

| Operate wind turbine to generate electrical power | 51 |

| Obtain measurements of component temperature during wind turbine operation | 52 |

| Compare measured component temperature to component temperature threshold | 53 |

54

Threshold met or exceeded?

no

yes

| Take mitigation action | 55 |

## FIG 7

25

20

## FIG 8

20

20

20

26

26

25

## FIG 9

27

20    20    20

## FIG 10

20    20    20    25

Europäisches
Patentamt

European
Patent Office

Office européen
des brevets

**EUROPEAN SEARCH REPORT**

Application Number

**EP 23 38 2605**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 779 181 A1 (SIEMENS GAMESA RENEWABLE ENERGY AS [DK]) 17 February 2021 (2021-02-17) | 1-10,14, 15 | INV. F03D7/02 F03D17/00 |
| Y | * paragraphs [0021] - [0024], [0030], | 12,13 | |
| A | [0031] - [0039], [0064] - [0067] * | 11 | |
| Y | EP 3 922 842 A1 (VESTAS WIND SYS AS [DK]) 15 December 2021 (2021-12-15) * the whole document * | 1-10, 12-15 | |
| Y | COLIN M A HERNANDEZ ET AL: "Offshore Cable Optimization by Probabilistic Thermal Risk Estimation", 2018 IEEE INTERNATIONAL CONFERENCE ON PROBABILISTIC METHODS APPLIED TO POWER SYSTEMS (PMAPS), IEEE, 24 June 2018 (2018-06-24), pages 1-6, XP033388495, DOI: 10.1109/PMAPS.2018.8440351 [retrieved on 2018-08-17] * the whole document * | 1-10, 12-15 | |
| | | | TECHNICAL FIELDS SEARCHED (IPC) |
| A | EP 3 098 442 A1 (GEN ELECTRIC [US]) 30 November 2016 (2016-11-30) * paragraphs [0034] - [0035]; figure 4 * | 1-15 | F03D |
| A | EP 3 273 056 A1 (VESTAS WIND SYS AS [DK]) 24 January 2018 (2018-01-24) * paragraph [0101] * | 1-15 | |

The present search report has been drawn up for all claims

| Place of search | Date of completion of the search | Examiner |
|---|---|---|
| The Hague | 17 November 2023 | Libeaut, Laurent |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 23 38 2605

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2023

| Patent document cited in search report | | Publication date | Patent family member(s) | | Publication date |
|---|---|---|---|---|---|
| EP 3779181 | A1 | 17-02-2021 | CN | 114207275 A | 18-03-2022 |
| | | | EP | 3779181 A1 | 17-02-2021 |
| | | | EP | 3987175 A1 | 27-04-2022 |
| | | | US | 2022290651 A1 | 15-09-2022 |
| | | | WO | 2021028199 A1 | 18-02-2021 |
| EP 3922842 | A1 | 15-12-2021 | EP | 3922842 A1 | 15-12-2021 |
| | | | US | 2021388815 A1 | 16-12-2021 |
| EP 3098442 | A1 | 30-11-2016 | BR | 102016011887 A2 | 29-11-2016 |
| | | | CA | 2930462 A1 | 26-11-2016 |
| | | | CN | 106194596 A | 07-12-2016 |
| | | | EP | 3098442 A1 | 30-11-2016 |
| | | | US | 2016348646 A1 | 01-12-2016 |
| EP 3273056 | A1 | 24-01-2018 | CN | 105593518 A | 18-05-2016 |
| | | | CN | 108691731 A | 23-10-2018 |
| | | | EP | 3027897 A1 | 08-06-2016 |
| | | | EP | 3273056 A1 | 24-01-2018 |
| | | | ES | 2700729 T3 | 19-02-2019 |
| | | | US | 2016196370 A1 | 07-07-2016 |
| | | | US | 2019294741 A1 | 26-09-2019 |
| | | | WO | 2015014368 A1 | 05-02-2015 |

EPO FORM P0459

For more details about this annex : see Official Journal of the European Patent Office, No. 12/82